(19)

Europäisches
Patentamt
European
Patent Office
Office européen
des brevets

(11) **EP 2 806 280 A1**

(12) **EUROPEAN PATENT APPLICATION**

(43) Date of publication:
**26.11.2014 Bulletin 2014/48**

(51) Int Cl.:
*G01R 31/08* (2006.01)      *H02J 3/38* (2006.01)

(21) Application number: **13168510.9**

(22) Date of filing: **21.05.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **ABB Research Ltd.**
**8050 Zürich (CH)**

(72) Inventors:
• **Krata, Jaroslaw**
**97-200 Tomaszów Mazowiecki**
**Lódzkie (PL)**

• **Balcerek, Przemyslaw**
**30-389 Kraków**
**Malopolskie (PL)**
• **Nuqui, Reynaldo**
**Cary, NC 27513 (US)**

(74) Representative: **Postiglione, Ferruccio et al**
**Gregorj S.r.l.**
**Intellectual Property**
**Via Muratori, 13 b**
**20135 Milano (IT)**

(54) **Detecting electrical islands using wide-area measurements**

(57)     Islanding events are detected using measurement information taken from several places in a network, e.g., from a system of intelligent electronic devices (IEDs). In an example method of island detection, phase angle differences between local phase angles and remote phase angles in remote subnetworks are evaluated (850), and whether power is stable at the local and remote subnetworks is determined (860), using the local power data and the remote power data. An island condition at the local subnetwork is detected (870), responsive to determining (i) that power is stable at the local subnetwork and the remote subnetworks, (ii) that remote phase angles at each of the remote subnetworks are stable, and (iii) that there is a change in phase angle differences between each remote subnetwork and the local subnetwork, each of said changes exceeding a predetermined threshold. An alarm indicator is triggered (880) in response to the detection of the island condition.

RECEIVE LOCAL PHASE ANGLE DATA
810

RECEIVE REMOTE PHASE ANGLE DATA
820

RECEIVE LOCAL POWER DATA
830

RECEIVE REMOTE POWER DATA
840

EVALUATE PHASE ANGLE DIFFERENCES
BETWEEN LOCAL AND REMOTE ANGLES
850

DETERMINE POWER STABILITY
AT LOCAL AND REMOTE SUBNETWORKS
860

DETECT ISLAND CONDITION
870

TRIGGER ALARM INDICATOR
880

*FIG. 8*

**Description**

TECHNICAL FIELD

The present disclosure is generally related to so-called smart electrical grids, and is more particularly related to the detection of electrical islands using wide-area measurement data in such smart grids.

BACKGROUND

Modem electrical networks, or "grids," increasingly incorporate distributed generation, where at least part of the electricity carried by the grid is produced from many relatively small energy sources, such as wind generators, solar-powered generators, etc. "Islanding" refers to a situation where a portion of the grid continues to be energized by one or more of these small energy sources when the primary electrical grid power from the electric utility is not present. This can arise, for example, in the case of a blackout, where a portion of the network is isolated from the utility's generation capabilities, but contains solar-powered generators or wind generators that continue to produce electricity.

Islanding can be dangerous to utility workers, who many not realize that a particular part of the electrical network is still powered. Islanding can also interfere with the automatic reconnection of devices as the network attempts to recover from a failure. After the islanding of a distributed generation source from the power system, the island typically does not have generation capacity that is matched to the loading demands. As a result, voltage phase and frequency shifts occur. During reclosing, the island is then out of synchronization with the power grid, which can cause equipment damage due to over-voltage and over-current situations. For these reasons, improved techniques and systems for automatic island detection are needed.

SUMMARY

Several embodiments of the present invention described herein are based on passive measurements, but allow the owner/operator of the distribution or transmission utility to confirm the existence or the non-existence of an islanding event. This information ensures the safety of maintenance personnel, stability of the power system, and protection of switchgears. Using wide-area information, i.e., measurement information taken from several places in a network, the techniques disclosed herein can be used to detect the existence of islands in various places throughout a network. The measurement information can be collected, in some embodiments, from a system of intelligent electronic devices (IEDs), any or all of which may be configured with the islanding detection functions detailed below.

Embodiments of the present invention include methods for island detection in an electrical distribution network, as well as corresponding devices and systems. An example method begins with receiving local phase angle data characterizing local phase angles at a node in a local subnetwork, receiving remote phase angle data characterizing remote phase angles at a node in each of one or more remote subnetworks that are normally electrically connected to the local subnetwork, receiving local power data characterizing a local power in the local subnetwork and receiving remote power data characterizing a remote power in each remote subnetwork. In some embodiments, the local phase angle data and remote phase angle data are received from phasor measurement units positioned in the local and remote subnetworks, but other sources for the data are possible.

The example method continues with, for each remote subnetwork, evaluating phase angle differences between the local phase angles and the remote phase angles and determining whether power is stable at the local subnetwork, using the local power data, and whether power is stable at each of the remote subnetworks, using the remote power data. An island condition at the local subnetwork is then detected, responsive to determining (i) that power is stable at the local subnetwork and the remote subnetworks, (ii) that remote phase angles at each of the remote subnetworks are stable, and (iii) that there is a change in phase angle differences between each remote subnetwork and the local subnetwork, each of said changes exceeding a predetermined threshold. An alarm indicator is triggered in response to the detection of the island condition.

Those skilled in the art will recognize additional features and advantages upon reading the following detailed description, and upon viewing the accompanying drawings.

BRIEF DESCRIPTION OF THE DRAWINGS

Figure 1 is a process flow diagram illustrating an example method for island detection in an electrical distribution network.
Figure 2 illustrates details of an example implementation of an island detection function.

Figure 3 illustrates details of an example implementation of a Local-Remote evaluation function. Figure 4 illustrates a time-series of angle differences, with regions corresponding to a monotonicity condition and a slip condition highlighted.

Figure 5 illustrates details of an example implementation of a local power evaluation function.

Figure 6 illustrates details of an example implementation of the remote angles checking function.

Figure 7 illustrates details of an example implementation of a remote angle checking function.

Figure 8 is a process flow diagram illustrating a generalized method for island detection in an electrical distribution network.

Figure 9 illustrates an example configuration of an island detection device.

Figure 10 shows the division of a distribution network into multiple subnetworks, each of which has an island detection device installed therein.

DETAILED DESCRIPTION

As noted above, electrical islanding can be dangerous and can interfere with automatic recovery from failures in an electrical network. For at least these reasons, several techniques for detecting islands have been developed.

Islanding detection algorithms can be divided into two main categories - passive and active. The category of passive islanding detection includes methods based only on measured quantities of power grid parameters, e.g., voltage and current. Active islanding detection techniques, on the other hand, are based on the injection of some sort of test signal into the power system, or an attempt to change a present signal (e.g., an artificially introduced shift in voltage phase), followed by a measurement of the system's response. Active techniques are usually used when a distributed generation is connected to the power grid through a power inverter; an induced change in the power system's conditions can be accomplished by changing the inverter controller set point(s).

Passive islanding detection techniques are generally based on detection of under-voltage or over-voltage conditions, under-frequency or over-frequency condition, voltage phase jumps, harmonic distortions, or the like, in various combinations. However, these techniques have conventionally relied on local measurements, i.e., within or closely associated with a protected piece of equipment, such as a distributed generator embedded within a utility system. This approach is intended to ensure that the generator trips during an islanding event. One problem with these conventional islanding detection techniques is that they sometimes lead to nondetection or false detection, because signals from islanding events may be similar to those caused by other disturbances. For example, it is known that angle swings in out-of-step events are comparable to angle swings during islanding.

Another problem is that existing islanding protection techniques are generally performed within the asset boundary of the independent power producer. A problem with this approach is that the action of such protection systems is not communicated in real time to the owner or operator of the transmission/distribution network.

Several embodiments of the present invention are based on passive measurements, but allow the owner/operator of the distribution or transmission utility to confirm the existence or the non-existence of an islanding event. This information ensures the safety of maintenance personnel, stability of the power system, and protection of switchgears. Using wide-area information, i.e., measurement information taken from several places in a network, the techniques disclosed herein can be used to detect the existence of islands in various places throughout a network. The measurement information can be collected, in some embodiments, from a system of intelligent electronic devices (IEDs), any or all of which may be configured with the islanding detection functions detailed below.

Another problem solved by some embodiments of the present invention is the dependable differentiation of islanding events from generator out-of-step events. This determination is important to secure the performance of any islanding detection method that uses system-wide information.

As already noted, IEDs may be configured with the islanding detection capabilities detailed below, so that each IED is capable of performing island detection at its respective location. These IEDs may be distributed throughout the network. More of these IEDs can be installed close to the premises of independent power producers (e.g., distributed generators, wind farms, combustion turbines, etc.), to reliably detect the islanding. Each IED in the system can flag an islanding event and notify a central controller and/or broadcast the event to other nodes in the system.

As further detailed below, embodiments of the present invention include methods and systems for detecting the existence of electrical islands using time-synchronized power-system data from across a protected part of an electrical power system. The disclosed techniques are based on detecting a significant voltage angle change between a local device and each of one or more remote devices and, in some cases, the persistency of these angle changes during the disturbance. Several of the disclosed techniques feature logic for differentiating an electrical island from other power system disturbances that have signatures similar to those produced by electrical islanding. The determination of an electrical island in several embodiments is further based on the existence of a stable power condition on the islanded system, concurrent with the stability of angle measurements external to the electrical island. When the disclosed techniques are deployed in each of several protection devices installed across a power network, the system of devices is capable of determining the existence of other electrical islands, at the location of each device.

The island detection techniques of the present invention are explained herein in the context of an intelligent electronic device associated with a particular point or region of the network. This electronic device is configured to implement an islanding detection algorithm that considers one point in the electrical distribution or transmission system to be a "local" point, while other points are "remote" ones. Using measurement data obtained from the local point and the remote points, the intelligent electronic device described herein determines whether the local point is in an island in relation to the rest of the system, as represented by the remote points. In some embodiments, the intelligent electronic device produces certain warning signals when some, but not all, of the criteria for islanding detection are met.

More particularly, the detailed description of an example intelligent electronic device assumes that measurement data from four remote points are used, along with local data. While some devices may be limited to the use of measurement data from four remote points, it should be appreciated that the disclosed techniques are not so limited, and may be readily extended to utilize measurement data from more (or fewer) than four remote points. It should also be appreciated that the disclosed techniques are not limited in their implementation to intelligent electronic devices positioned in the "local" area. The techniques may instead be carried out in a centralized node, for example, where data from a particular area or node of interest is designated as "local" data for the purposes of islanding detection, while data from other sites is designated as "remote" data.

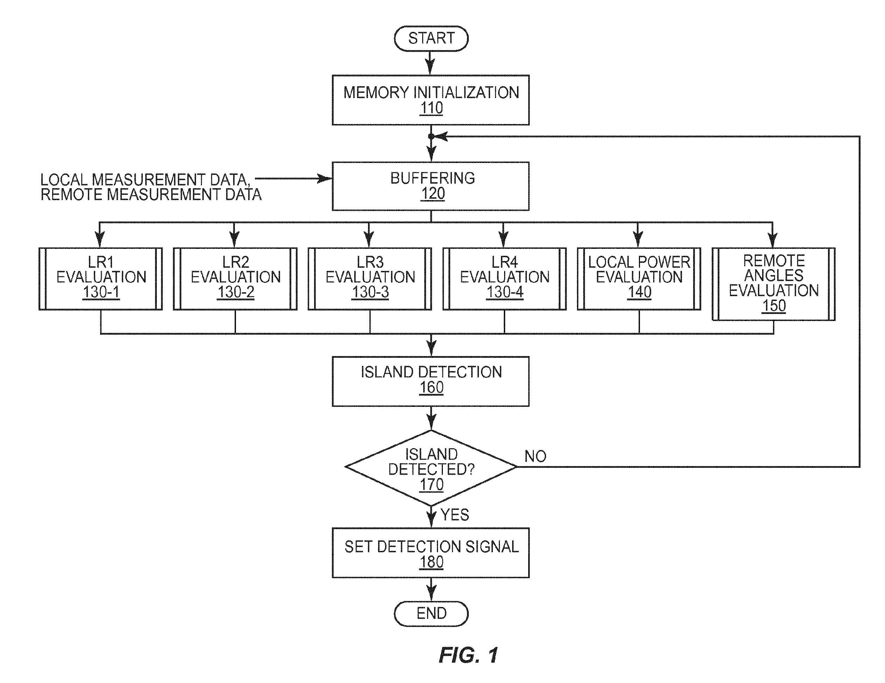

Figure 1 is a process flow diagram illustrating an example technique for island detection according to some embodiments of the present invention. As shown at block 110, the illustrated method begins with an initialization of system memory, which may include the setting of certain default values, etc. The method continues, as shown at block 120, with the buffering of measurement data, including local measurement data and remote measurement data. As noted above, the "local" data corresponds to the region under test, i.e., a subnetwork for which island detection is being performed. The remote measurement data is obtained from locations outside the region under test. By definition, if the local region is an island then the remote measurement data corresponds to locations outside the island.

The local measurement data includes, but is not necessarily limited to, local phase angle data characterizing local phase angles at a node in a local subnetwork, and local power data characterizing a local power in the local subnetwork. This data may be received from a phasor measurement unit (PMU), in some embodiments, or from some other measurement device or devices in the local subnetwork. Likewise, the remote measurement data includes remote phase angle data characterizing remote phase angles at a node in each of one or more remote subnetworks that are normally electrically connected to the local subnetwork, as well as remote power data characterizing a remote power in each remote subnetwork. Again, the remote measurement data may be obtained from PMUs, in some embodiments. As will be seen in the discussion that follows, buffering a series of measurements from each of the local and remote subnetworks facilitates the computation of various steady-state values, rolling averages, or the like, which are used in detecting islanding scenarios. Note that the buffered data may include phase angle measurements and/or phase angle differences, e.g., phase angle differences between the local node and each of the remote nodes. The buffered data typically includes a time-ordered series for each parameter of interest, representing sequential measurements taken at each node. The data is synchronous, in that it is either time-stamped or is stored in such a manner that the timing between or among measurements is known to the system, so that data for different nodes at a given time can be readily compared.

As seen at blocks 130-1, 130-2, 130-3, and 130-4, a separate Local-Remote (LR) evaluation is carried out for each of the remote points (i.e., remote points 1, 2, 3, and 4). This evaluation, which will be explained in further detail below, generally considers the behavior of the local node relative to a particular remote point, and more particularly includes the evaluation of phase angle differences between the local phase angles and the remote phase angles to determine whether there is a change in phase angle differences between each remote subnetwork and the local subnetwork that would suggest an islanding condition. The LR evaluation for each remote subnetwork also includes an evaluation of whether the power measured at the remote subnetwork is stable, given a predetermined stability criterion. As will be illustrated below, the presence of unstable power may be used to "blind" the angle evaluation, in some embodiments, since the angle measurements may be unreliable during a period of power instability.

As shown at block 140, a local power evaluation is also carried out, whereby it is determined whether the power at the local subnetwork is stable, given a predetermined stability criterion. This is used to ensure that a detected islanding condition is actually an islanding phenomenon, and not an out-of-step condition. As seen at block 150, a remote angles evaluation is carried out, whereby it is determined that the phase angles at the remote phase angles are stable.

The results of the LR evaluations, the local power evaluation, and the remote angles evaluation are supplied to an island detection function, as shown at block 160. The island detection function detects an island condition at the local subnetwork responsive to determining i) that power is stable at the local subnetwork and the remote subnetworks, (ii) that remote phase angles at each of the remote subnetworks are stable, and (iii) that there is a change in phase angle differences between each remote subnetwork and the local subnetwork, each of said changes exceeding a predetermined threshold. If an island is detected, as shown at block 170, then a detection signal is set, as shown at block 180. Otherwise, the buffering, evaluation, and detection functions are repeated, using updated measurement data.

*Island detection function*

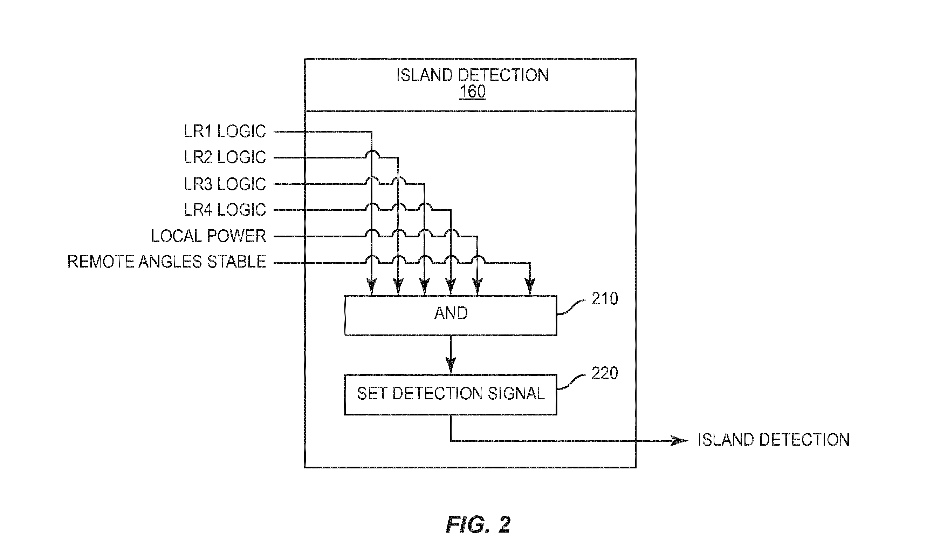

Figure 2 illustrates details of an example implementation of an island detection function 160. Island detection function 160 receives, as inputs, the outputs from LR detection functions 130-*i*. In this example, island detection function 160 receives inputs from four such LR detection functions 130-*i*; these inputs are labeled "LR1 logic," "LR2 logic," etc. Likewise, island detection function 160 receives an input from a local power evaluation function 140; this input is labeled "local power" in Figure 2. Finally, island detection function 160 receives an input from a remote angles evaluation function 150; this input is labeled "remote angles stable" in Figure 2.

If an islanding condition exists for the local node, all of these inputs are positive, which together indicate that power is stable at the local subnetwork and the remote subnetworks, that remote phase angles at each of the remote subnetworks are stable, and that there is a change in phase angle differences between each remote subnetwork and the local subnetwork, each of said changes exceeding a predetermined threshold. Accordingly, the inputs are combined at AND function 210. A positive output from AND function 210 sets an islanding detection signal, as shown at block 220. This islanding detection signal may be regarded as an alarm indicator signal, which may be used, for example, to trigger the disconnecting of one or more generating units in the local subnetwork, or to adjust a power output of one or more generating units in the local subnetwork, to balance power load and power generation in the local subnetwork.

*LR evaluation function*

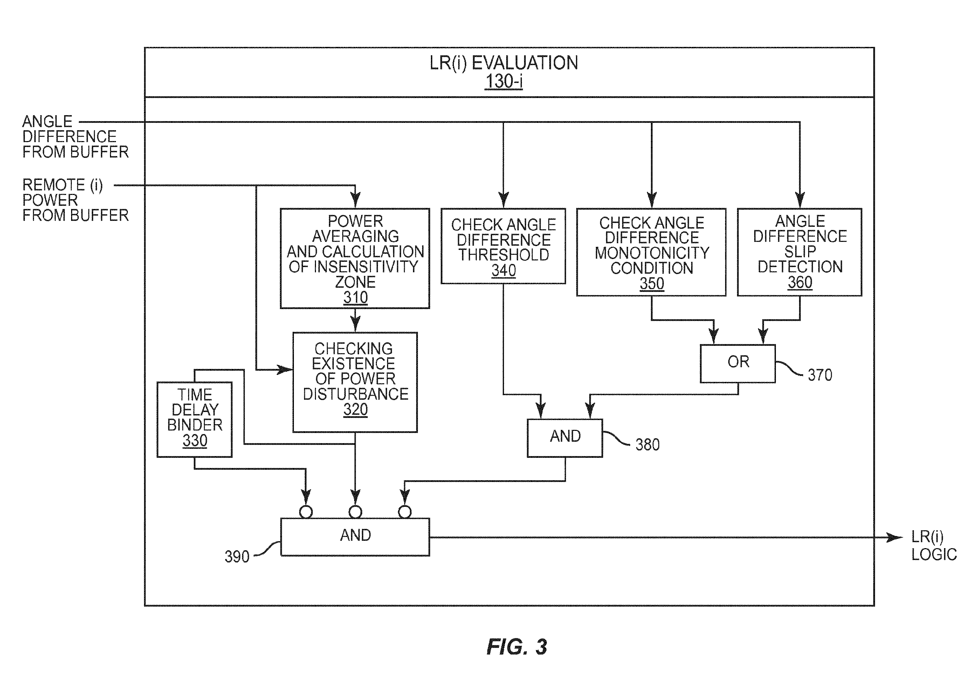

Figure 3 illustrates details of an example implementation of the LR evaluation function. Accordingly, the process flow illustrated in Figure 3 corresponds to any one of the blocks 130-*i* in Figure 1. As noted above, this is the partial logic that considers the angle difference between the local point and a remote one, as well as ensuring that the remote point has a stable power condition (i.e., a lack of power disturbance). If there is a power disturbance, the partial logic is "blinded" for a certain predetermined time.

The remote power checking and blinding functions are shown at blocks 310, 320, and 330. Angle checking is performed at blocks 340, 350, and 360. The results of the several checks are combined at logic blocks 370, 380, and 390.

The remote power checking involves testing the remote power measurement data for a power disturbance. This is generally performed by comparing instantaneous power measurements to a short-term average value. An envelope is applied to the average value, to allow for moderate deviations from the average value. In some cases, the envelope is calculated as a predetermined percentage of a long-term mean power. Deviations in the power measurements that extend outside that envelope indicate a power disturbance.

In the example shown in Figure 3, the power averaging calculations and the calculation of an insensitivity zone are carried out at remote power calculations module 310. One example calculation of the average power value is as follows, where *avg_factor* is a predetermined number of samples that sets the averaging time. The averaging time should be set long enough to smooth the data, but no so long as to obscure trends resulting from changes in loading/generation conditions.

$$P_{avg(i)} = \frac{\sum_{n=i-avg\_factor}^{n=i}(P_n)}{avg\_factor} \quad , \qquad (1)$$

where:

$P\_avg(i)$ is the averaged power value in *i*-th sample,
$P\_n$ is the measured value of power in n-th sample,
i is the current sample number, and
*avg_factor* is the number of samples used to calculate average value.

Before testing for a power disturbance, a power envelope needs to be calculated. Accordingly, an envelope parameter described by an *insense_zone* setting is respectively added and subtracted to the average power value, as follows. Note that this assumes an envelope having the same width on either side of the average value. In some embodiments, the envelope may be asymmetrical, instead.

$$P_{env(i)} = P_{avg(i)} \pm insense\_zone * P_{mean} \quad , \qquad (2)$$

where:

P_env(i) are the upper and lower values, P_env_upper(i) and P_env_lower(i), of the power envelope at the *i*-th sample,

insense_zone is a parameter describing range of no-detection zone in power disturbance, and

P_mean is a long-term mean value of power in steady-state.

Referring again to Figure 3, power-disturbance checking module 320 checks for the existence of a power disturbance in the remote power, given the envelope calculations produced by remote power calculations module 310. The actual measured value of power P(i) is compared to the range of values established by the envelope P_env(i). If the current power value does not fall within the envelope, then a disturbance detection signal is sent, i.e., the output of power-disturbance checking module 320 indicates a power disturbance.

If a power disturbance at a given remote node is detected, it is assumed that angle values for that node are unreliable for some interval after the power disturbance is first detected. Accordingly, a "blinding" function is used to extend the disturbance detection signal so that it persists for a predetermined time after the remote power value returns to within the power envelope. This is performed by the time-delay blinder function 330 shown in Figure 3, where the disturbance detection signal produced by module 320 triggers the initiation of a timer that sets a duration for which the output of module 330 indicates a continuation of the power disturbance.

The primary purpose of LR evaluation function 130-*i* is to evaluate phase angle differences between the phase angles for the local node and the phase angles for the remote node i. The example LR evaluation function 130-*i* shown in Figure 3 includes three different evaluations, performed by threshold-check module 340, monotonicity-check module 350, and slip-detection module 360. The use of all three of these checks ensures that the remote node phase angles have changed, with respect to the local node phase angles, in a manner that suggests an islanding condition. In the implementation shown in Figure 3, the threshold condition and either the monotonicity condition or the slip-detection condition must be met. However, some implementations may use fewer than all three of these checks. For example, some implementations may include only the threshold-check module 340 (in which case threshold-check module can be connected directly to AND function 390), while others may include the threshold-check module 340 and the monotonicity-check module 350 (in which case monotonicity-check module 350 can be connected directly to AND function 380).

In an example implementation, threshold-check module 340 checks the angle-difference threshold condition by first calculating a steady-state angle difference, which is calculated as a mean value using a series of values from the angle difference buffer. The angle difference buffer stores the difference between the local node phase angle and the remote node phase angle for each sample time. The steady-state angle difference $\alpha_{ss}$ is subtracted from the angle difference for time i to yield an angle-difference change from steady-state value, as follows:

$$\alpha_{lr(i)} = (\alpha_l - \alpha_{r(i)}) - \alpha_{ss} \qquad , \qquad (3)$$

where:

$\alpha_{lr(i)}$ is the positive sequence voltage angle difference between the local node and the remote node i,

$\alpha_l$ is the positive sequence voltage angle in the local node, and

$\alpha_{r(i)}$ is the positive sequence voltage in remote node *i*. Theshold-check module 340 outputs a positive logic signal when the value $\alpha_{lr(i)}$ is above a predefined threshold:

$$\alpha_{lr(i)} > rem\_thr \qquad , \qquad (4)$$

where:

rem_thr is a the predefined threshold for the positive sequence angle difference.

For a reliable determination of an islanding condition, the angle difference between the local node and each remote node $i$ must be constantly changing (increasing or decreasing) by more than a predefined value. Monotonicity-check module 350 determines whether this is the case. In an example implementation, an interpolation coefficient is calculated from a series of samples (e.g., 300) stored in buffer. The angle differences are unwrapped for this computation, to ensure that slips will not introduce errors.

In general, for a series of samples and the linear regression given by the formula

$$f(x) = ax + b \quad , \quad (5)$$

values of $a$ and $b$ can be calculated to obtain a function as close as possible to the given sample set. To check the monotonicity condition for islanding, there is only a need to know direction and a rate of change. As a result, only coefficient $a$ needs to be calculated. This can be done according to the following equations:

$$a = \frac{n \sum_{i=1}^{n} x_i y_i - \sum_{i=1}^{n} x_i * \sum_{i=1}^{n} y_i}{D} \quad , \quad (6)$$

$$D = n \sum_{i=1}^{n} x_i^2 - \left( \sum_{i=1}^{n} x_i \right)^2 \quad , \quad (7)$$

where:

    $a$ is the regression coefficient of interest,
    n is the number of samples,
    $x\_i$ is the $i$-th sample of $x$ values (time value in algorithm), and
    $y\_i$ is the $i$-th sample of $y$ values (frequency differences in algorithm). The condition that must be met in order to send detection signal is:

$$a > mon\_thr \quad , \quad (8)$$

    where $mon\_thr$ is the threshold for the regression coefficient.

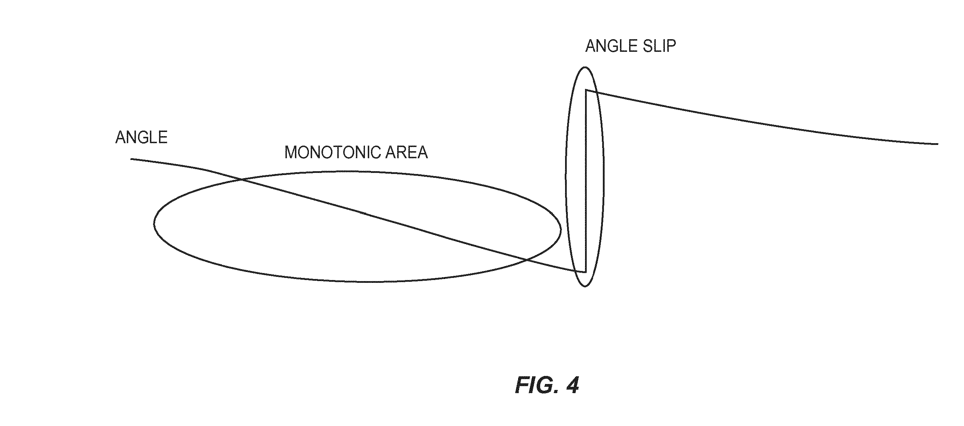

To improve the reliability in detecting the islanding condition, a slip in angle difference should be detected. Either the monotonicity condition or the slip-detection, in conjunction with the angle-difference threshold condition, indicates a possible islanding condition. This is shown in Figure 4, which illustrates a time-series of angle differences, with the regions corresponding to the monotonicity condition and the slip condition highlighted.

The slip detection is performed by slip-detection module 360. In this example, this is done by calculating a gradient value for the angle differences and comparing this gradient value to a predefined threshold value:

$$\partial \alpha_n = \frac{\alpha_n - \alpha_{n-1}}{t_n - t_{n-1}} \quad , \quad (9)$$

where:

    n is a sample index,

    $\partial \alpha_n$ is the discrete gradient value of the positive sequence angle difference,

$\alpha_{\text{n}}$, $t_n$ are, respectively, the angle difference and the time for sample n, and

$\alpha_{n\text{-}1}$, $t_{n\text{-}1}$ are, respectively, the angle difference and the time for sample $n$-1.

Referring back to Figure 3, it can be seen that the outputs from the monotonicity-check module 350 and slip-detection module 360 are OR'ed, at OR function 370, so that either condition will generate a positive output from OR function 370. That output is AND'ed with the output from angle-difference threshold check module 340, at AND function 380, so that both the output from angle-difference threshold check module 340 and the output from OR function 370 must be positive to yield a positive output from AND function 380. Finally, the output from AND function 380 is combined, at AND function 390, with the inverses of the outputs from power-disturbance check module 320 and the time-delay blinder module 330. Accordingly, the output from LR evaluation module 130-*i* will be positive only if the angle difference checks are satisfied (as indicated by a positive output from AND function 380) and there is neither a remote power disturbance signal nor an extended power disturbance signal from modules 320 and 330, respectively. Note that the functions shown in LR evaluation function 130-*i* are performed independently, for each remote node i. As was seen above, in the discussion of Figure 2, a positive indication must be received from each LR evaluation function 130-*i* before it can be concluded that the local node has been islanded.

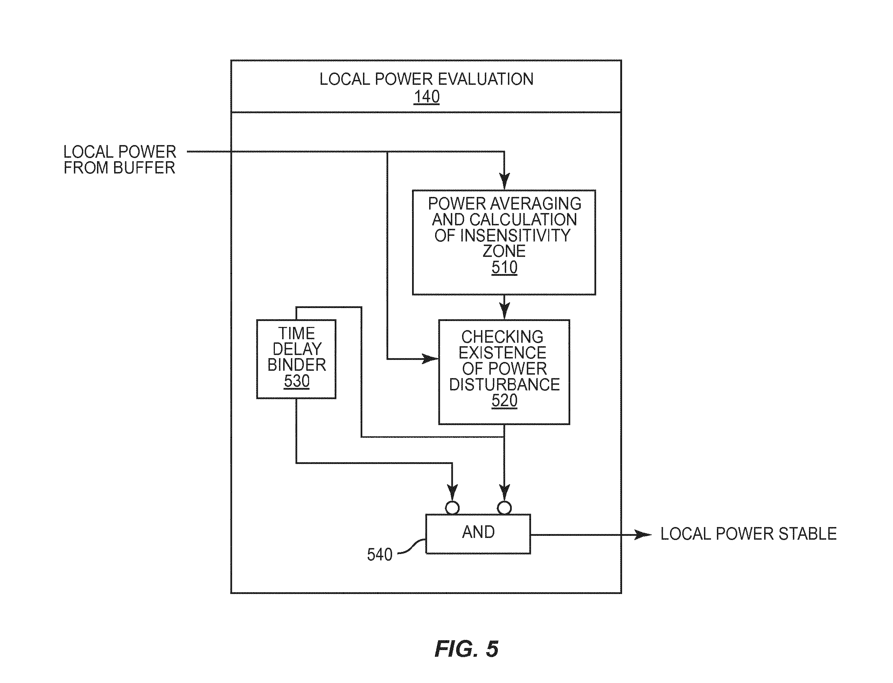

Figure 5 illustrates details of an example implementation of the local power evaluation function. Accordingly, the process flow illustrated in Figure 5 corresponds to block 140 in Figure 1. As noted above, this function determines whether the power at the local subnetwork is stable, given a predetermined stability criterion. This is used to ensure that a detected islanding condition is actually an islanding phenomenon, rather than a transient phenomenon triggered by, for example, an out-of-step condition.

The local power checking and blinding functions are shown at blocks 510, 520, and 530. The results of the several checks are combined at AND function 540. The local power checking involves testing the local power measurement data for a power disturbance. This is generally performed by comparing instantaneous power measurements to a short-term average value. An envelope is applied to the average value, to allow for moderate deviations from the average value. In some cases, the envelope is calculated as a predetermined percentage of a long-term mean power. Deviations in the power measurements that extend outside that envelope indicate a power disturbance. It will be appreciated that the techniques and calculations for the local power checking and blinding functions may be the same as those described above for the remote power checking and blinding functions in Figure 3, although one or more parameters such as the averaging time, envelope width, etc., may differ. Accordingly, a detailed description of blocks 510, 520, and 530 is not repeated here.

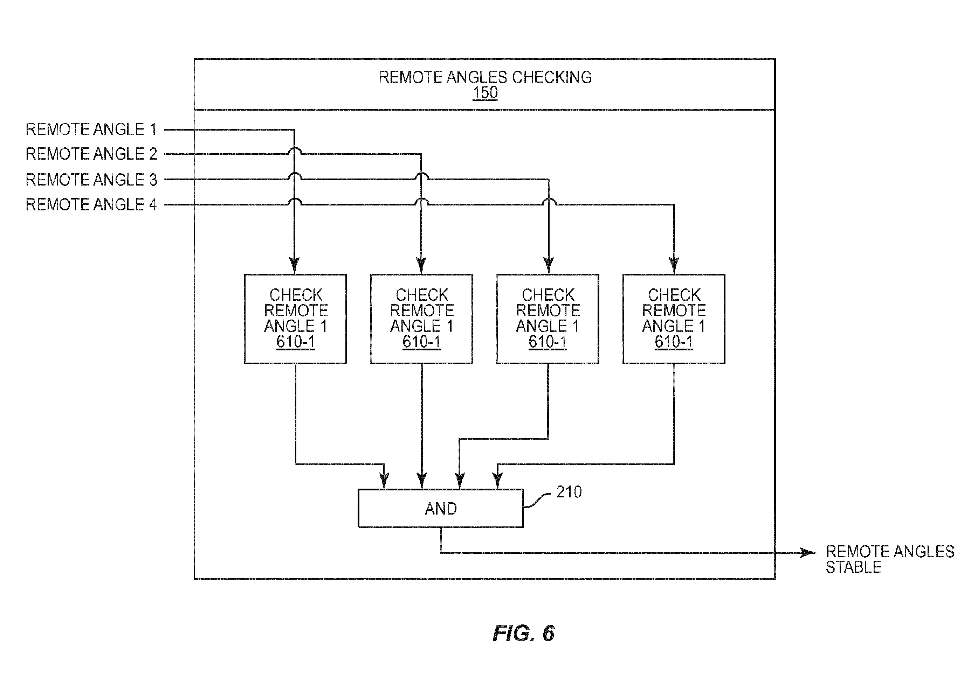

Figure 6 illustrates details of an example implementation of the remote angles checking function. Accordingly, the process flow illustrated in Figure 6 corresponds to block 150 in Figure 1. As noted above, this function determines whether the phase angles at the remote phase angles are stable over time. This determination is carried out separately for each remote node. Accordingly, the example implementation shown in Figure 6 includes four checking functions 610-*i*, corresponding to the four remote nodes. The outputs from checking functions 610-*i* are combined at AND function 620. Accordingly, the output from remote angles checking function 150 is positive only if all four checking functions 610-*i* have positive outputs.

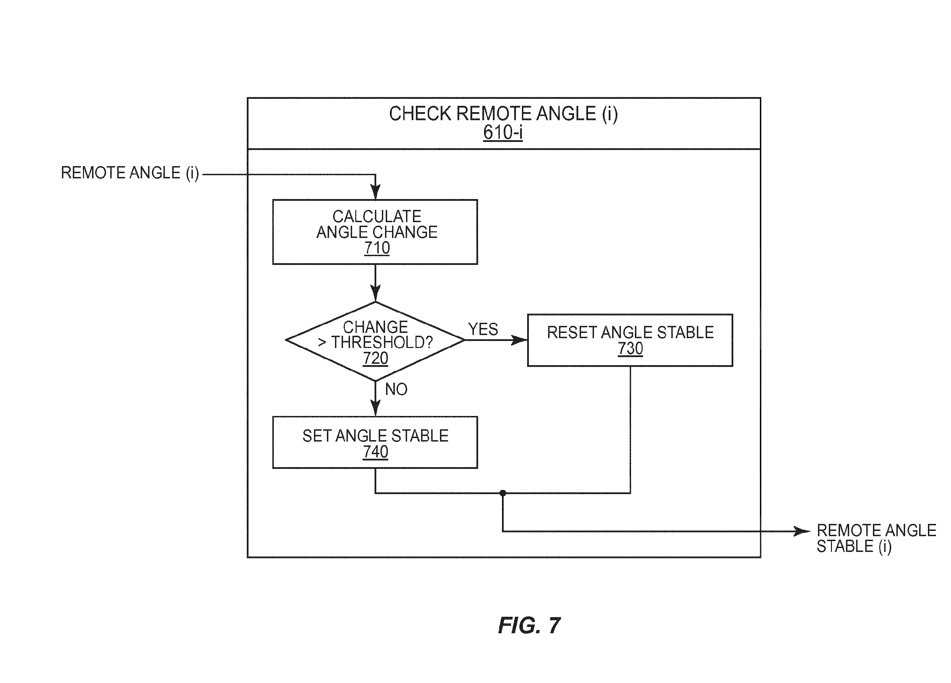

Figure 7 illustrates details of an example implementation of the checking functions 610-*i*. As shown at block 710, a remote angle change is calculated for the remote node i, using buffered remote angle data. The remote angle change is calculated as a difference between actual measured remote angle value and a steady-state value of this remote angle, e.g., according to the following:

$$\Delta\alpha_{r(i)} = \alpha_{r(i)} - \alpha_{rss(i)} \quad , \quad (10)$$

where $\alpha_{rss(i)}$ is a steady-state positive sequence remote angle value. Initially, a steady-state value is delivered to the algorithm as a predefined value; the steady-state value is updated during operation, e.g., as a rolling average of samples stored in the buffer. Note that the steady-state value should not be updated with angle values during intervals when a power disturbance occurs. The steady-state value from before the power disturbance is carried over to the end of the disturbance.

As shown at block 720, the checking function 610-*i* determines whether the remote angles are stable by comparing the current value of the remote angle change $\Delta\alpha_{r(i)}$ to a threshold value:

$$\Delta\alpha_{r(i)} < remote\_thr \quad , \quad (11)$$

where *remote_thr* is a predetermined threshold that establishes a stability criterion for the remote angles.

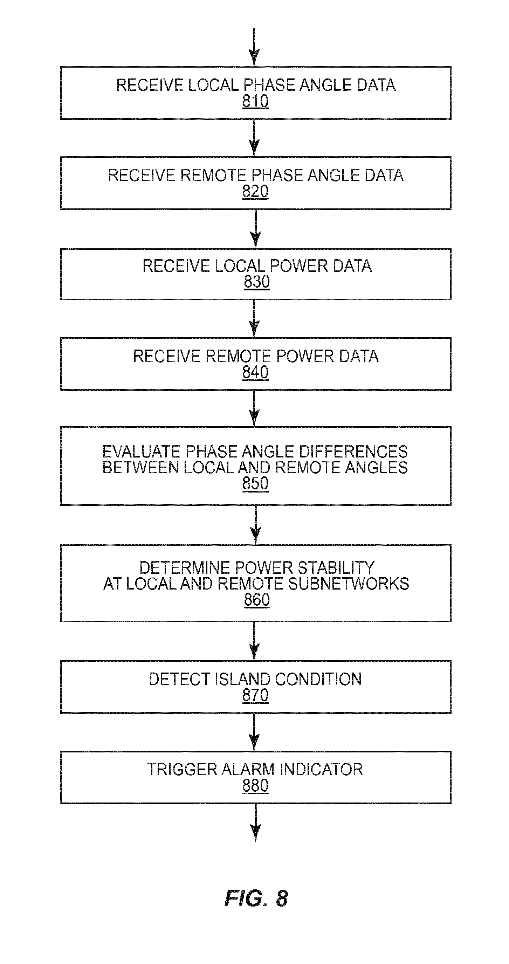

With the example implementations of Figures 1-3 and 5-7 in mind, it will be appreciated that the process flow diagram of Figure 8 illustrates a generalized method for island detection in an electrical distribution network. The illustrated process, and variants thereof, may be implemented using analog circuitry, digital logic, one or more processors or controllers programmed with suitable software and/or firmware, or some combination thereof.

As shown at block 810, the illustrated method begins with receiving local phase angle data characterizing local phase angles at a node in a local subnetwork. Remote phase angle data is also received, as shown at block 820. The remote phase angle data characterizes remote phase angles at a node in each of one or more remote subnetworks that are normally electrically connected to the local subnetwork. As shown at blocks 830 and 840, local power data and remote power data are also received, the local power data and remote power data characterizing a local power in the local subnetwork and characterizing remote power in each of the remote subnetworks, respectively.

As shown at block 850, the method continues with the evaluation of phase angle differences between the local phase angles and the remote phase angles. Block 860 shows that power stability at the local subnetwork and at each of the remote subnetworks is also determined, using the local power data and remote power data, respectively. Finally, as shown at block 870, an island condition is detected at the local subnetwork. This detection is responsive to determining at least: (i) that power is stable at the local subnetwork and the remote subnetworks, (ii) that remote phase angles at each of the remote subnetworks are stable, and (iii) that there is a change in phase angle differences between each remote subnetwork and the local subnetwork, each of these changes exceeding a predetermined threshold. An alarm indicator is triggered, as shown at block 880, in response to the detection of the islanding condition.

In some embodiments of the illustrated method, the local phase angle data and remote phase angle data are received from phasor measurement units (PMUs) positioned in the local and remote subnetworks. These PMUs typically provide measurements referred to as synchrophasors. The synchrophasors are calculated with respect to a common reference sinuosoid, which is accurately synchronized among the PMUs, using GPS signals. In the illustration of example implementations above, the phase angle data was positive sequence voltage angles; it will be appreciated that other representations for the phase data may be used, in various embodiments.

As was shown in several of the examples above, the determination of whether power is stable at a given subnetwork may, in some embodiments, comprise averaging a series of power samples to determine an average power value for the corresponding subnetwork, calculating a power envelope range surrounding the average power value, and comparing a current power sample to the power envelope range, wherein determining that the power for the given subnetwork is stable comprises determining that the current power sample falls within the power envelope range. In some of these embodiments, calculating the power envelope range comprises determining a power value window, centered on the average power value, the power value window having a width calculated by multiplying the average power value (or a longer-term steady state value) by a predetermined insensitivity parameter. Other power stability criterion may be used, in other embodiments. It should also be appreciated that the power stability criterion used for evaluating the local power may or may not be the same that is used to evaluate remote power.

In some embodiments of the method shown in Figure 8, evaluating phase angle differences between the local phase angles and the remote phase angles for a given remote subnetwork comprises buffering angle differences between local phase angles and synchronous remote phase angles for the given remote subnetwork and calculating a rolling mean value of the buffered angle differences. Determining that there is a change in phase angle difference between the given remote subnetwork and the local subnetwork then comprises determining that a current angle difference deviates from the rolling mean value by more than the predetermined threshold.

In some embodiments of the method illustrated in Figure 8, the detecting of the island condition is further conditioned on determining, for each of the remote subnetworks, that phase angle differences between the remote subnetwork and the local subnetwork are changing, over a period of time, at more than a predetermined rate. In other embodiments, the detecting of the island condition is further conditioned on determining, for each of the remote subnetworks, that phase angle differences between the remote subnetwork and the local subnetwork are changing, over a period of time, at more than a predetermined rate, or that a pair of consecutive phase angle differences between the remote subnetwork and the local subnetwork differ by more than a predetermined slip parameter, or both.

In some embodiments, determining that remote phase angles at each of the remote subnetworks are stable comprises, for each remote subnetwork, calculating a rolling mean value from samples of the remote phase angles and determining that a current remote phase angle does not differ from the rolling mean value by more than a predetermined value.

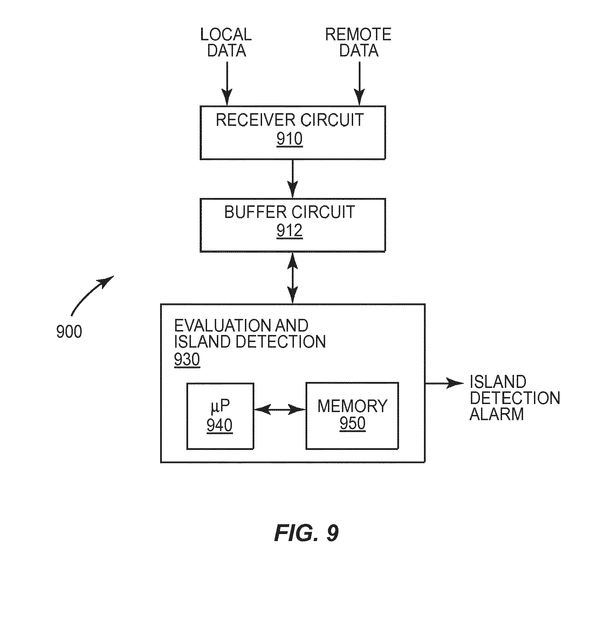

The method shown in Figure 8 may be performed at a node in the local subnetwork, in some cases. This node may be, for example, a protection device at a point of connection between the local subnetwork and an electrical distribution grid. Figure 9 illustrates one example configuration of an island detection device 900 according to some embodiments of the present invention - it will be appreciated that this device may be part of a protection device or measurement device, in some embodiments, or may be a separate device, in others.

Island detection device 900 includes a receiver circuit 910, which collects measurement data for a local subnetwork ("local data") and measurement data for one or more remote subnetworks ("remote data"). In some embodiments, receiver circuit 910 may include a wireless receiver circuit adapted to receive wireless transmissions from one or more remote island detection devices, one or more remote measurement units, and/or one or more local measurements units. Receiver circuit 910 may instead include one or more wired receiver or transceiver circuits. Other embodiments may include a combination of both. Any of these or other embodiments may include circuitry adapted to receive the local data and/or remote data from a local-area or wide-area data communications network.

Island detection device 900 further includes a buffer circuit 912, which includes memory circuits and other circuitry adapted to store, i.e., buffer, measurement data collected by receiver circuit. As discussed above, this buffering facilitates the computation of average values and/or steady-state values for one or more of the measurement parameters. Buffered data may include, for example, a series of power measurements for the local subnetwork and for each of the remote subnetworks and phase angle measurements for the local subnetwork and for each of the remote subnetworks. In some cases, buffer circuit may be adapted to calculate phase angle differences between the local phase angle measurements and each of the corresponding remote phase angle measurements, and to store these phase angle differences. Note that the depth of the buffer may vary from one parameter to another.

Island detection device 900 still further comprises an evaluation and island detection circuit 930. Evaluation and island detection circuit 930 carries out the various evaluation and detection functions described above in connection with Figures 1-7. It will be appreciated that any of these functions may be implemented using analog circuitry, digital logic, one or more processors or controllers programmed with suitable software and/or firmware, or some combination thereof. In the illustrated example, evaluation and island detection circuit 930 includes a microprocessor 940 and associated memory device 950. In this example embodiment, memory device 950 stores program code for execution by microprocessor 940, which program code allows the evaluation and island detection circuit 930 to carry out the method illustrated in Figure 8 or a variation thereof.

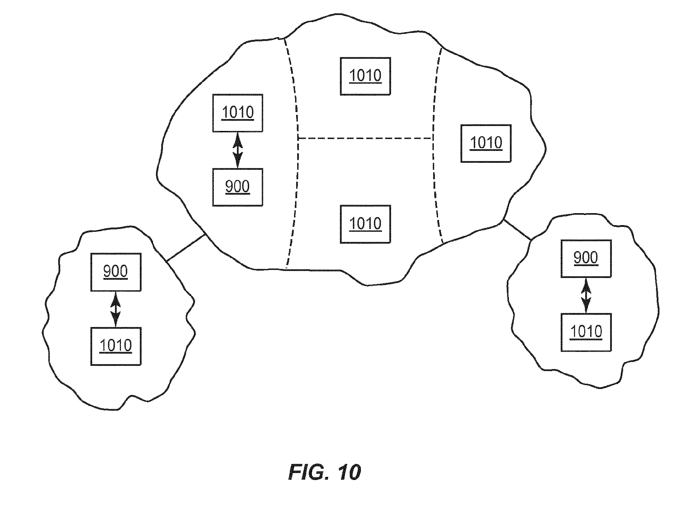

As was noted above, the islanding detection functions described herein can be implemented at each of several nodes distributed throughout a network. These nodes can be adapted to share measurement data with one another, in some embodiments. A simplified example is shown in Figure 10, which shows the division of a distribution network into multiple subnetworks, each of which has an island detection device 900 installed therein. Each island detection device 900 receives measurement data from a local PMU 1010 and one or more PMUs in other subnetworks. Some of the PMUs 1010 may be associated with an island detection device 900, while others are stand-alone. Each island detection device performs the island detection functions described above with respect to its local subnetwork. With this approach, the isolation of any one of the subnetworks from the others can be detected.

It should be appreciated that the implementations shown in Figures 1-10 are only examples, and that other implementations, providing the same or similar functionality and/or outputs, may be substituted for any one or more of the illustrated functions. A principal application of this methods, devices, and systems descried above is the detection of islanding events in transmission and/or distribution systems that uses synchronized phasor measurements. The functions and algorithms detailed above have been tested in a power system with wind farms with good results. While these functions and algorithms were designed for the detection of islanding of wind farms, it should be appreciated that the disclosed techniques are general enough to be applied to systems with traditional generators.

Embodiments of the present invention can provide several benefits. The disclosed techniques allow faster determination of islanding events by transmission and distribution owners with traditional generators, embedded distributed generators, or renewable parks, such as wind farms. Improved island detection helps to ensure the safety of maintenance personnel by independent confirmation of an islanding event by the distribution system operator. Likewise, improved island detection can help ensure the longevity of switching assets, such as reclosers, by avoiding unnecessary actions that may arise from false detection of islanding events. The techniques disclosed herein also improve system stability, by facilitating a quick differentiation between islanding and out-of-step events.

Those skilled in the art will appreciate that the foregoing description and the accompanying drawings represent non-limiting examples of the systems and apparatus taught herein for detecting islanding events in a power distribution network. As such, the present invention is not limited by the foregoing description and accompanying drawings. Instead, the present invention is limited only by the following claims and their legal equivalents.

**Claims**

1.   A method of island detection in an electrical distribution network, **characterized in that** the method comprises:

   receiving (810) local phase angle data characterizing local phase angles at a node in a local subnetwork;
   receiving (820) remote phase angle data characterizing remote phase angles at a node in each of one or more remote subnetworks that are normally electrically connected to the local subnetwork;
   receiving (830) local power data characterizing a local power in the local subnetwork and receiving (840) remote power data characterizing a remote power in each remote subnetwork;

for each remote subnetwork, evaluating (850) phase angle differences between the local phase angles and the remote phase angles;

determining (860) whether power is stable at the local subnetwork, using the local power data, and whether power is stable at each of the remote subnetworks, using the remote power data;

detecting (870) an island condition at the local subnetwork, responsive to determining (i) that power is stable at the local subnetwork and the remote subnetworks, (ii) that remote phase angles at each of the remote subnetworks are stable, and (iii) that there is a change in phase angle differences between each remote subnetwork and the local subnetwork, each of said changes exceeding a predetermined threshold; and

triggering (880) an alarm indicator in response to said detecting.

2. The method of claim 1, wherein the local phase angle data and remote phase angle data are received from phasor measurement units positioned in the local and remote subnetworks.

3. The method of claim 1 or 2, wherein determining (860) power is stable at a given subnetwork comprises averaging a series of power samples to determine an average power value for the corresponding subnetwork, calculating a power envelope range surrounding the average power value, and comparing a current power sample to the power envelope range, wherein determining that the power for the given subnetwork is stable comprises determining that the current power sample falls within the power envelope range.

4. The method of claim 3, wherein calculating the power envelope range comprises determining a power value window, centered on the average power value, the power value window having a width calculated by multiplying the average power value by a predetermined insensitivity parameter.

5. The method of any of claims 1-4, wherein evaluating (850) phase angle differences between the local phase angles and the remote phase angles for a given remote subnetwork comprises buffering angle differences between local phase angles and synchronous remote phase angles for the given remote subnetwork and calculating a rolling mean value of the buffered angle differences, and wherein determining that there is a change in phase angle difference between the given remote subnetwork and the local subnetwork comprises determining that a current angle difference deviates from the rolling mean value by more than the predetermined threshold.

6. The method of any of claims 1-5, wherein said detecting (870) is further conditioned on determining, for each of the remote subnetworks, that phase angle differences between the remote subnetwork and the local subnetwork are changing, over a period of time, at more than a predetermined rate.

7. The method of any of claims 1-5, wherein said detecting (870) is further conditioned on determining, for each of the remote subnetworks, that phase angle differences between the remote subnetwork and the local subnetwork are changing, over a period of time, at more than a predetermined rate, or that a pair of consecutive phase angle differences between the remote subnetwork and the local subnetwork differ by more than a predetermined slip parameter, or both.

8. The method of any of claims 1-7, wherein determining that remote phase angles at each of the remote subnetworks are stable comprises, for each remote subnetwork, calculating a rolling mean value from samples of the remote phase angles and determining that a current remote phase angle does not differ from the rolling mean value by more than a predetermined value.

9. The method of any of claims 1-8, wherein the node in the local subnetwork comprises a protection device at a point of connection between the local subnetwork and an electrical distribution grid.

10. The method of any of claims 1-9, further comprising performing at least one of the following actions in response to said alarm indicator:

disconnecting one or more generating units in the local subnetwork; or

adjusting a power output of one or more generating units in the local subnetwork to balance power load and power generation in the local subnetwork.

11. An island detection device (900) comprising a receiver circuit (910), a buffer circuit (920), and **characterized by** comprising an island evaluation and detection circuit (930) adapted to:

receive local phase angle data characterizing local phase angles at a node in a local subnetwork, relative to the island detection device;

receive, via the receiver circuit (910), remote phase angle data characterizing remote phase angles at a node in each of one or more remote subnetworks that are normally electrically connected to the local subnetwork;

receive local power data characterizing a local power in the local subnetwork and receive, via the receiver circuit (910), remote power data characterizing a remote power in each remote subnetwork;

for each remote subnetwork, evaluate phase angle differences between the local phase angles and the remote phase angles;

determine whether power is stable at the local subnetwork, using the local power data, and whether power is stable at each of the remote subnetworks, using the remote power data;

detect an island condition at the local subnetwork, responsive to determining (i) that power is stable at the local subnetwork and the remote subnetworks, (ii) that remote phase angles at each of the remote subnetworks are stable, and (iii) that there is a change in phase angle differences between each remote subnetwork and the local subnetwork, each of said changes exceeding a predetermined threshold; and

trigger an alarm indicator in response to said detecting.

12. The island detection device (900) of claim 11, wherein the receiver circuit (910) is adapted to receive the remote phase angle data from phasor measurement units positioned in the remote subnetworks.

13. The island detection device (900) of claim 11 or 12, wherein the island evaluation and detection circuit (930) is adapted to determine whether power is stable at a given subnetwork by averaging a series of power samples to determine an average power value for the corresponding subnetwork, calculating a power envelope range surrounding the average power value, and comparing a current power sample to the power envelope range, wherein determining that the power for the given subnetwork is stable comprises determining that the current power sample falls within the power envelope range.

14. The island detection device (900) of claim 13, wherein the island evaluation and detection circuit (930) is adapted to calculate the power envelope range by determining a power value window, centered on the average power value, the power value window having a width calculated by multiplying the average power value by a predetermined insensitivity parameter.

15. The island detection device (900) of any of claims 11-14, wherein the island evaluation and detection circuit (930) is adapted to evaluate phase angle differences between the local phase angles and the remote phase angles for a given remote subnetwork by buffering angle differences between local phase angles and synchronous remote phase angles for the given remote subnetwork and calculating a rolling mean value of the buffered angle differences, and wherein the island evaluation and detection circuit (930) is adapted to determine that there is a change in phase angle difference between the given remote subnetwork and the local subnetwork by determining that a current angle difference deviates from the rolling mean value by more than the predetermined threshold.

16. The island detection device (900) of any of claims 11-15, wherein said detecting is further conditioned on determining, for each of the remote subnetworks, that phase angle differences between the remote subnetwork and the local subnetwork are changing, over a period of time, at more than a predetermined rate.

17. The island detection device (900) of any of claims 11-15, wherein said detecting is further conditioned on determining, for each of the remote subnetworks, that phase angle differences between the remote subnetwork and the local subnetwork are changing, over a period of time, at more than a predetermined rate, or that a pair of consecutive phase angle differences between the remote subnetwork and the local subnetwork differ by more than a predetermined slip parameter, or both.

18. The island detection device (900) of any of claims 11-17, wherein the island evaluation and detection circuit (930) is adapted to determine that remote phase angles at each of the remote subnetworks are stable by, for each remote subnetwork, calculating a rolling mean value from samples of the remote phase angles and determining that a current remote phase angle does not differ from the rolling mean value by more than a predetermined value.

19. The island detection device (900) of any of claims 11-18, wherein the node in the local subnetwork comprises a protection device at a point of connection between the local subnetwork and an electrical distribution grid.

20. The island detection device (900) of any of claims 11-19, wherein the island evaluation and detection circuit (930) is further adapted to perform at least one of the following actions in response to said alarm indicator:

disconnect one or more generating units in the local subnetwork; or
adjust a power output of one or more generating units in the local subnetwork to balance power load and power generation in the local subnetwork.

21. An electrical distribution network comprising multiple subnetworks, **characterized in that** a plurality of the subnetworks each comprise an island detection device (900) according to any of claims 11-20, each of the island detection devices (900) carrying out island detection with respect its corresponding local subnetwork and one or more remote subnetworks.

*FIG. 1*

ISLAND DETECTION
160

LR1 LOGIC
LR2 LOGIC
LR3 LOGIC
LR4 LOGIC
LOCAL POWER
REMOTE ANGLES STABLE

AND                    210

SET DETECTION SIGNAL          220

ISLAND DETECTION

**FIG. 2**

**FIG. 3**

EP 2 806 280 A1

ANGLE SLIP

ANGLE

MONOTONIC AREA

*FIG. 4*

**FIG. 5**

LOCAL POWER EVALUATION
140

LOCAL POWER FROM BUFFER

POWER AVERAGING AND CALCULATION OF INSENSITIVITY ZONE
510

TIME DELAY BINDER
530

CHECKING EXISTENCE OF POWER DISTURBANCE
520

540 — AND

LOCAL POWER STABLE

18

*FIG. 6*

**CHECK REMOTE ANGLE (i)**
610-i

REMOTE ANGLE (i)

CALCULATE ANGLE CHANGE
710

CHANGE > THRESHOLD?
720

YES

RESET ANGLE STABLE
730

NO

SET ANGLE STABLE
740

REMOTE ANGLE STABLE (i)

*FIG. 7*

RECEIVE LOCAL PHASE ANGLE DATA
810

RECEIVE REMOTE PHASE ANGLE DATA
820

RECEIVE LOCAL POWER DATA
830

RECEIVE REMOTE POWER DATA
840

EVALUATE PHASE ANGLE DIFFERENCES
BETWEEN LOCAL AND REMOTE ANGLES
850

DETERMINE POWER STABILITY
AT LOCAL AND REMOTE SUBNETWORKS
860

DETECT ISLAND CONDITION
870

TRIGGER ALARM INDICATOR
880

*FIG. 8*

LOCAL DATA    REMOTE DATA

RECEIVER CIRCUIT
910

BUFFER CIRCUIT
912

900

EVALUATION AND ISLAND DETECTION
930

μP
940

MEMORY
950

ISLAND DETECTION ALARM

**FIG. 9**

**FIG. 10**

Europäisches
Patentamt

European
Patent Office

Office européen
des brevets

# EUROPEAN SEARCH REPORT

Application Number

EP 13 16 8510

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | A. ETXEGARAI, P. EGUIA, I. ZAMORA: "Analysis of Remote Islanding Detection Methods for Distributed Resources", INTERNATIONAL CONFERENCE ON RENEWABLE ENERGIES AND POWER QUALITY (ICREPQ'11), [Online] 13 April 2011 (2011-04-13), - 15 April 2011 (2011-04-15), XP002716559, * page 4, paragraph A.1 * | 1-21 | INV. G01R31/08 H02J3/38 |
| Y | US 7 225 087 B1 (SICILIANO ROBERT [US] ET AL) 29 May 2007 (2007-05-29) * paragraph [0044]; figure 1 * * paragraph [0047] * * paragraph [0051] * | 1-21 | |
| Y | SCHWEITZER, WHITEHEAD, ZWEIGLE, RAVIKUMAR: "Synchrophasor based power system protection and control application", 2010 TEXAS A&M CONFERENCE FOR PROTECTIVE RELAY ENGINEERS, 29 March 2010 (2010-03-29), - 1 April 2010 (2010-04-01), XP002716560, * page 4 - page 5 * | 1-21 | |

|  |  |  | TECHNICAL FIELDS SEARCHED (IPC) |
|---|---|---|---|
|  |  |  | H02J G01R |

The present search report has been drawn up for all claims

| Place of search | Date of completion of the search | Examiner |
|---|---|---|
| Munich | 19 November 2013 | Castagné, Olivier |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 13 16 8510

This annex lists the patent family members relating to the patent documents cited in the above-mentioned European search report.
The members are as contained in the European Patent Office EDP file on
The European Patent Office is in no way liable for these particulars which are merely given for the purpose of information.

19-11-2013

| Patent document cited in search report | Publication date | Patent family member(s) | Publication date |
|---|---|---|---|
| US 7225087 B1 | 29-05-2007 | NONE | |

EPO FORM P0459

For more details about this annex : see Official Journal of the European Patent Office, No. 12/82